# EUROPEAN PATENT APPLICATION

(11) **EP 3 872 130 A1**
(43) Date of publication of application: **01.09.2021**
(21) Application number: 19876512.5
(22) Date of filing: 03.10.2019
(51) Int. Cl.: C08L 23/30, C08K 5/098, C08K 5/57, C08L 27/04

(54) **LIQUID STABILIZER FOR CHLORINE-CONTAINING RESIN, AND METHOD FOR MANUFACTURING SAME**

(30) Priority: 25.10.2018 JP 2018200801
(71) Applicant: Sakai Chemical Industry Co., Ltd., Sakai-shi, Osaka 590-8502 (JP)
(72) Inventor: NISHII Toshihiro, Sakai-shi, Osaka 590-0985 (JP); TSUDA Koichi, Sakai-shi, Osaka 590-0985 (JP)
(74) Representative: Müller-Boré & Partner Patentanwälte PartG mbB
(86) International application number: PCT/JP2019/039052
(87) International publication number: WO 2020/085026

(57) **Abstract**

Provided is a liquid stabilizer, which can improve releasability without impairing transparency. A liquid stabilizer for a chlorine-containing resin of the present invention includes: an oxidized polyethylene wax having an acid value of 5 mgKOH/g or more; a dispersion medium; and at least one kind selected from the group consisting of a zinc salt, an alkaline earth metal salt, and an organotin compound. The liquid stabilizer of the present invention is a dispersion, and a dispersoid including the oxidized polyethylene wax has a median diameter (D₅₀) of from 1 µm to 50 µm.

## Description

### Technical Field

The present invention relates to a liquid stabilizer for a chlorine-containing resin composition and a manufacturing method for the same.

### Background Art

A chlorine-containing resin, such as a vinyl chloride-based resin, is excellent in flexibility and easy to process, and hence is used in various applications. The chlorine-containing resin has problems with transparency, releasability, and heat resistance, and decomposition of the chlorine-containing resin due to heat may even occur during processing and during use. Of those problems, releasability from a die significantly affects productivity of a product, and hence tends to be regarded as important. In a chlorine-containing resin composition, a liquid stabilizer is used in many cases in order to ameliorate those problems (Patent Literature 1).

The liquid stabilizer typically includes a zinc metal salt, an alkaline earth metal salt, a phosphite compound, an organotin compound, an antioxidant, and the like. For the purpose of solving the above-mentioned problems, in recent years, an addition amount of the liquid stabilizer has tended to be increased. However, when contents of the metal salts and the phosphite compound in the liquid stabilizer are increased, transparency of a processed product to be obtained is reduced in some cases.

In addition, as another means for improving releasability of a composition, there is known a method involving adding a lubricant. However, a liquid lubricant has a problem in that sufficient releasability is not obtained. Further, a solid lubricant needs to be weighed and added separately from the liquid stabilizer, and hence may reduce productivity. In addition, the solid lubricant has low compatibility with the liquid stabilizer, and hence, even when added to the liquid stabilizer, the solid lubricant may settle to cause compositional segregation. Accordingly, there is a problem of impairment of desired characteristics of the composition, such as a defect in each manufacturing step (e.g., occurrence of plate-out) and an accompanying reduction in thermal stability. As a result, there is a demand for a liquid stabilizer capable of improving releasability without impairing characteristics such as transparency and thermal stability.

### Citation List

### Patent Literature

[PTL 1] JP 02-274748 A

### Summary of Invention

### Technical Problem

The present invention has been made in order to solve the above-mentioned problems, and a primary object of the present invention is to provide a liquid stabilizer for a chlorine-containing resin, which can improve releasability without impairing transparency, and a manufacturing method for the same.

### Solution to Problem

According to one embodiment of the present invention, there is provided a liquid stabilizer for a chlorine-containing resin, including: an oxidized polyethylene wax having an acid value of 5 mgKOH/g or more; a dispersion medium; and at least one kind selected from the group consisting of a zinc salt, an alkaline earth metal salt, and an organotin compound. The liquid stabilizer for a chlorine-containing resin is a dispersion. A dispersoid including the oxidized polyethylene wax has a median diameter (D₅₀) of from 1 µm to 50 µm.

In one embodiment, a content of the oxidized polyethylene wax is from 0.1 wt% to 15 wt% with respect to a total amount of the liquid stabilizer.

In one embodiment, the oxidized polyethylene wax has a density of 0.85 g/cm³ or more.

According to another embodiment of the present invention, there is provided a manufacturing method for a liquid stabilizer for a chlorine-containing resin. The manufacturing method includes: mixing at least a dispersion medium and an oxidized polyethylene wax with each other at a temperature equal to or higher than a dropping point of the oxidized polyethylene wax; and cooling the mixture while stirring the mixture.

In one embodiment, the cooling the mixture while stirring the mixture is performed until a temperature of the mixture becomes 90°C or less.

In one embodiment, the stirring is performed using a highspeed stirring disperser or a disperser configured to use dispersion media.

In one embodiment, the mixing step further includes adding a dispersant to the mixture.

### Advantageous Effects of Invention

The liquid stabilizer for a chlorine-containing resin of the present invention contains the oxidized polyethylene wax having an acid value of 5 mgKOH/g or more, the dispersion medium, and the at least one kind selected from the group consisting of a zinc salt, an alkaline earth metal salt, and an organotin compound. The liquid stabilizer for a chlorine-containing resin of the present invention is a dispersion, and the dispersoid including the oxidized polyethylene wax has a median diameter (D₅₀) of from 1 µm to 50 µm. As described above, a solid lubricant has low compatibility with the liquid stabilizer, and hence may cause a defect in a manufacturing step. The liquid stabilizer of the present invention is a dispersion, and the dispersoid including the oxidized polyethylene wax has a median diameter (D₅₀) of from 1 µm to 50 µm. By virtue of the dispersoid including the oxidized polyethylene wax being contained with such median diameter (D₅₀) , releasability can be improved without the impairment of transparency. Further, the liquid stabilizer of the present invention can satisfactorily maintain the state in which the dispersoid including the oxidized polyethylene wax is dispersed. Accordingly, a liquid stabilizer excellent in storage stability can be provided.

### Description of Embodiments

The following is a description on embodiments of the present invention. However, the present invention is not limited to these embodiments.

### A. Liquid Stabilizer

A liquid stabilizer for a chlorine-containing resin (hereinafter sometimes referred to as "liquid stabilizer") of the present invention contains an oxidized polyethylene wax having an acid value of 5 mgKOH/g or more, a dispersion medium, and at least one kind selected from the group consisting of a zinc salt, an alkaline earth metal salt, and an organotin compound. The liquid stabilizer of the present invention is a dispersion. The liquid stabilizer of the present invention is in a state in which a dispersoid including the oxidized polyethylene wax is dispersed in the dispersion medium. The median diameter (D₅₀) of the dispersoid is from 1 µm to 50 µm. By virtue of the dispersoid including the oxidized polyethylene wax being dispersed with such median diameter (D₅₀), a liquid stabilizer capable of improving releasability without impairing transparency can be provided. Further, the liquid stabilizer of the present invention can satisfactorily maintain the state in which the oxidized polyethylene wax is dispersed. Accordingly, a liquid stabilizer excellent in storage stability can be provided.

The median diameter (D₅₀) of the dispersoid is from 1 µm to 50 µm, preferably from 1 µm to 30 µm, more preferably from 1 µm to 25 µm. When the median diameter (D₅₀) of the dispersoid including the oxidized polyethylene wax falls within the above-mentioned ranges, a liquid stabilizer capable of improving releasability without impairing transparency can be provided. When the median diameter (D₅₀) is more than 50 µm, the transparency of a composition having added thereto the liquid stabilizer is reduced, and the releasability-improving effect is not sufficiently obtained in some cases. Further, the dispersion stability of the liquid stabilizer may also be reduced. When the median diameter (D₅₀) is less than 1 µm, there is a risk in that the viscosity of the liquid stabilizer may be increased to reduce handleability. In addition, the dispersoid becomes liable to aggregate, and hence the dispersion stability may be reduced. Herein, the median diameter (D₅₀) is a median diameter on a volume basis, and refers to a particle diameter corresponding to a value for cumulative particle diameter distribution on a volume basis of 50%. The median diameter (D₅₀) of the dispersoid may be measured with, for example, a laser diffraction/scattering particle diameter distribution measurement apparatus (e.g., a product available under the product name LA-950 from Horiba, Ltd.).

### A-1. Oxidized Polyethylene Wax

An oxidized polyethylene wax having an acid value of 5 mgKOH/g or more is used as the oxidized polyethylene wax. The oxidized polyethylene waxes may be used alone or in combination thereof. The acid value of the oxidized polyethylene wax is preferably 7 mgKOH/g or more, more preferably 10 mgKOH/g or more. When the acid value falls within such ranges, a liquid stabilizer capable of improving releasability without impairing transparency is obtained. The acid value is preferably 50 mgKOH/g or less, more preferably 45 mgKOH/g or less. Herein, the acid value is a value measured in conformity with ASTM D-1386.

The density of the oxidized polyethylene wax is preferably 0.85 g/cm³ or more, more preferably 0.95 g/cm³ or more. In addition, the density of the oxidized polyethylene wax is preferably 1.1 g/cm³ or less, more preferably 1.0 g/cm³ or less. When the density of the oxidized polyethylene wax falls within such ranges, releasability can be improved without the impairment of transparency. When the density is less than 0.85 g/cm³, the releasability-improving effect is not sufficiently obtained in some cases. In addition, coloring of a resin composition and a reduction in transparency thereof occur in some cases. Herein, the density is a value measured in conformity with ASTM D-1505.

The oxidized polyethylene wax has a viscosity at 150°C of preferably from 2,000 cps to 85,000 cps, more preferably from 3,000 cps to 10,000 cps. When the viscosity falls within such ranges, the other constituent materials for the liquid stabilizer and the oxidized polyethylene wax can be uniformly mixed with each other. In addition, the oxidized polyethylene wax can be satisfactorily dispersed in the liquid stabilizer (more specifically the dispersion medium). Herein, the viscosity is a value measured with a Brookfield viscometer.

Commercially available oxidized polyethylene waxes may be used. Specific examples thereof include A-C 307 and 307A (acid value: 7 mgKOH/g, density: 0.98 g/cm³), A-C 316 and 316A (acid value: 16 mgKOH/g, density: 0.98 g/cm³), A-C 325 (acid value: 25 mgKOH/g, density: 0.99 g/cm³), A-C 392 (acid value: 30 mgKOH/g, density: 0.99 g/cm³), A-C 330 (acid value: 30 mgKOH/g, density: 0.99 g/cm³), and A-C 395 and 395A (acid value: 41 mgKOH/g, density: 1.00 g/cm³) serving as high-density oxidized polyethylene homopolymers manufactured by Honeywell.

The content of the oxidized polyethylene wax is preferably 0.1 wt% or more, more preferably 1 wt% or more, still more preferably 5 wt% or more with respect to the total amount of the liquid stabilizer. When the content of the oxidized polyethylene wax falls within the above-mentioned ranges, a liquid stabilizer capable of improving releasability without impairing transparency can be provided. The upper limit of the content of the oxidized polyethylene wax is not particularly limited. In view of a possible increase in cost, and an increase in viscosity of the liquid stabilizer, which impairs its fluidity, the content of the oxidized polyethylene wax is preferably 15 wt% or less.

### A-2. Dispersion Medium

Any appropriate solvent capable of dispersing the oxidized polyethylene wax is used as the dispersion medium. For example, a solvent having a boiling point higher than the softening point (dropping point) of the oxidized polyethylene wax and being excellent in compatibility with the oxidized polyethylene wax is used. Examples thereof include a petroleum-based hydrocarbon and an aromatic high-boiling-point solvent, such as an alkylbenzene. A petroleum-based hydrocarbon or an aromatic high-boiling-point solvent is preferably used. The dispersion mediums may be used alone or in combination thereof.

As the dispersion medium, commercially available mediums and solvents may be used. Examples thereof include AF solvent 4 and Cactus Solvent manufactured by JXTG Energy Corporation, Shellsol A 150 manufactured by Shell Japan Limited, and Ipzole 150 manufactured by Idemitsu Kosan Co., Ltd. The commercially available mediums and solvents may be used alone or in combination thereof.

The dispersion medium may be selected in accordance with, for example, the applications of a composition containing the liquid stabilizer, and the softening point (dropping point) of the oxidized polyethylene wax to be used. In one embodiment, a component contained in the liquid stabilizer may function as the dispersion medium. For example, a plasticizer to be described later may function as the dispersion medium for the oxidized polyethylene wax.

The content of the dispersion medium in the liquid stabilizer may be set to any appropriate amount. For example, it is appropriate to add the dispersion medium so that the contents of the components contained in the liquid stabilizer other than the dispersion medium, for example, the oxidized polyethylene wax, the at least one kind selected from the group consisting of a zinc salt, an alkaline earth metal salt, and an organotin compound, and any appropriate other additive, and the content of the dispersion medium may total to 100 wt%.

### A-3. Plasticizer

Any appropriate plasticizer may be used as a plasticizer. For example, a phthalate, an alkyl adipate, a non-phthalic acid-based plasticizer, and an epoxidized vegetable oil may be used. The plasticizers may be used alone or in combination thereof. In one embodiment, the plasticizer functions as the dispersion medium. Accordingly, a plasticizer that is liquid at room temperature is suitably used as the plasticizer.

Examples of the phthalate include dibutyl phthalate, diheptyl phthalate, dioctyl phthalate (DOP), di-2-ethylhexyl terephthalate (DOTP), di-2-ethylhexyl isophthalate, diisooctyl phthalate, diisononyl phthalate (DINP), dioctyldecyl phthalate, diisodecyl phthalate, and butylbenzyl phthalate.

Examples of the alkyl adipate include di-2-ethylhexyl adipate, dioctyl adipate, didecyl adipate, and dibutyl diglycol adipate.

A compound having no phthalate skeleton may be used as the non-phthalic acid-based plasticizer. Examples thereof include alicyclic ester compounds. Of those, an alkyl ester of a dicarboxylic acid having an alicycle is preferably used. The alkyl group of the alkyl ester is preferably an alkyl group having 1 to 20 carbon atoms. A specific example thereof is diisononyl 1,2-cyclohexanedicarboxylate.

Examples of the epoxidized vegetable oil include an epoxidized soybean oil, an epoxidized linseed oil, and an epoxidized castor oil. Of those, an epoxidized soybean oil is preferred.

The content of the plasticizer in the liquid stabilizer may be set to any appropriate amount. The content is, for example, from 10 wt% to 80 wt%, preferably from 10 wt% to 50 wt%, more preferably from 10 wt% to 30 wt%. In addition, when the plasticizer is used as the dispersion medium, it is appropriate to add the plasticizer so that the contents of the components contained in the liquid stabilizer other than the plasticizer, for example, the oxidized polyethylene wax, the at least one kind selected from the group consisting of a zinc salt, an alkaline earth metal salt, and an organotin compound, and any appropriate other additive, and the content of the plasticizer may total to 100 wt%.

### A-4. Zinc Salt, Alkaline Earth Metal Salt, and Organotin Compound

Any appropriate salts and compound may be used as the zinc salt, the alkaline earth metal salt, and the organotin compound. For example, an organic acid zinc salt and an alkaline earth metal salt of an organic acid may be used as the zinc salt and the alkaline earth metal salt. Those salts have little toxicity and little odor, and hence can be suitably used for a liquid stabilizer for use in a chlorine-containing resin composition to be used for, for example, food packaging.

The organic acid zinc salt is typically obtained by causing an organic acid and zinc oxide to react with each other. In one embodiment, the organic acid zinc salt is an organic acid normal salt obtained by causing 1 equivalent of zinc oxide to react with 2 equivalents of the organic acid.

The organic acid is typically a carboxylic acid. Examples of the carboxylic acid include a saturated fatty acid, an unsaturated fatty acid, and a carbocyclic carboxylic acid each having 2 to 22 carbon atoms. Specific examples of those carboxylic acids include acetic acid, propionic acid, valeric acid, caproic acid, octylic acid, 2-ethylhexylic acid, tridecanoic acid, isodecanoic acid, neodecanoic acid, undecanoic acid, lauric acid, myristic acid, palmitic acid, stearic acid, isostearic acid, 12-hydroxystearic acid, oleic acid, linoleic acid, ricinoleic acid, erucic acid, behenic acid, thioglycolic acid, mercaptopropionic acid, laurylmercaptopropionic acid, benzoic acid, para-t-butylbenzoic acid, 3-methylbenzoic acid, dimethylbenzoic acid, aminobenzoic acid, salicylic acid, aminoacetic acid, glutamic acid, oxalic acid, glutaric acid, succinic acid, malonic acid, adipic acid, phthalic acid, fumaric acid, maleic acid, malic acid, citric acid, tartaric acid, thiodipropionic acid, trimellitic acid, pyromellitic acid, and mellitic acid. Of those, oleic acid, octylic acid, benzoic acid, para-t-butylbenzoic acid, 3-methylbenzoic acid, 2-ethylhexylic acid, neodecanoic acid, maleic acid, and trimellitic acid are preferred, and oleic acid, octylic acid, 2-ethylhexylic acid, benzoic acid, para-t-butylbenzoic acid, and 3-methylbenzoic acid are more preferred. Only one kind of organic acid zinc salt may be incorporated into the liquid stabilizer, or two or more kinds thereof may be incorporated thereinto.

The content of the organic acid zinc salt in the liquid stabilizer is preferably from 5 wt% to 40 wt%, more preferably from 5 wt% to 20 wt% with respect to the total amount of the liquid stabilizer. When the content of the organic acid zinc salt falls within such ranges, coloring at the time of the manufacturing and/or processing of a molded body can be suppressed.

The alkaline earth metal salt of the organic acid is typically obtained by causing the organic acid and an alkaline earth metal-containing substance to react with each other. Examples of the alkaline earth metal include calcium (Ca), magnesium (Mg), strontium (Sr), and barium (Ba). Of those, calcium and barium are preferred. Examples of the alkaline earth metal-containing substance include calcium hydroxide, barium hydroxide, and magnesium oxide. Examples of the organic acid are as described above. Preferred examples of the organic acid include oleic acid, benzoic acid, and para-t-butylbenzoic acid. Only one kind of alkaline earth metal salt of the organic acid may be incorporated into the liquid stabilizer, or two or more kinds thereof may be incorporated thereinto.

The content of the alkaline earth metal salt of the organic acid in the liquid stabilizer is preferably from 5 wt% to 70 wt%, more preferably from 5 wt% to 50 wt% with respect to the total amount of the liquid stabilizer. When the content of the alkaline earth metal salt falls within such ranges, seizure at the time of the manufacturing of a molded body is reduced, and hence the long-run property can be improved.

Examples of the organotin compound include methyltin mercaptide, dimethyltin mercaptide, dibutyltin maleate, dibutyltin mercaptide, dibutyltin laurate, dioctyltin mercaptide, and dioctyltin laurate. Of those, methyltin mercaptide and dimethyltin mercaptide are preferred. The organotin compounds may be used alone or in combination thereof.

The content of the organotin compound in the liquid stabilizer is preferably from 0.5 wt% to 3.0 wt%, more preferably from 0.5 wt% to 1.0 wt% with respect to the total amount of the liquid stabilizer. When the content of the organotin compound falls within such ranges, seizure at the time of the manufacturing of a molded body is reduced, and hence a product having high transparency can be obtained.

### A-5. Dispersant

In one embodiment, the liquid stabilizer of the present invention further contains a dispersant. When the liquid stabilizer further contains the dispersant, the oxidized polyethylene wax can be more satisfactorily dispersed, and hence the liquid stabilizer can be made more excellent in dispersion stability.

Any appropriate dispersant may be used as the dispersant. Examples thereof include a glycerin-based fatty acid ester, a propylene glycol-based fatty acid ester, a sorbitan-based fatty acid ester, a polyoxyethylene aliphatic alkyl (C12 to C20) ether, a sucrose fatty acid (C8 to C22) ester, calcium stearoyl lactate, a fatty acid alcohol (C8 to C18) sulfate (Na), an alkyl (C10 to C18) sulfonate (Na, K, NH₄), a polyethylene glycol fatty acid (C8 to C18) ester, an alkyl (C8 to C22) benzene sulfonate (Na, K, NH₄) polyoxypropylene, a polyoxyethylene block polymer, a polyoxyethylene (oxyethylene unit: 20) sorbitan fatty acid (C12 to C18) ester, a sodium dialkyl (C6 to C13) sulfosuccinate, sodium lauroyl sarcosinate, sodium N-oleyl-N-methyltaurine, sodium n-dodecyl polyoxyethylene (oxyethylene unit: 50) sulfate, sodium dodecylphenyl polyoxyethylene (oxyethylene unit: 40) sulfate, sodium beef tallow alkyl polyoxyethylene (oxyethylene unit: 40) sulfate, sodium nonylphenoxy polyoxyethylene (oxyethylene unit: 4) sulfate, a polyoxyethylene (oxyethylene unit: 4 to 50) alkyl (C8 or more) phenyl ether, nonylphenyl polyoxyethylene (oxyethylene unit: 5 to 55) phosphate, tridecyl polyoxyethylene (oxyethylene unit: 4 to 10) phosphate, an N,N-bis(2-hydroxyethyl) aliphatic alkyl (C8 to C18) amine, N,N-bis(2-hydroxyethyl)stearylamine, a boric acid ester of a glycerin monofatty acid (C16, C18) ester, a natural linear fatty acid (C8 to C18) choline ester chloride, sucrose benzoate, and a naphthalenesulfonic acid soda-formaldehyde condensate. Of those, a glycerin-based fatty acid ester, such as decaglycerin monoester, is preferably used. The dispersants may be used alone or in combination thereof.

The content of the dispersant is preferably from 0.001 wt% to 1.0 wt%, more preferably from 0.001 wt% to 0.5 wt% with respect to the total amount of the liquid stabilizer. When the content of the dispersant falls within the above-mentioned ranges, the oxidized polyethylene wax can be satisfactorily dispersed.

### A-6. Phosphite Compound

The liquid stabilizer of the present invention preferably further contains a phosphite compound. Examples of the phosphite compound include triphenyl phosphite, tris(2,4-di-t-butylphenyl) phosphite, tris(nonylphenyl) phosphite, tris(dinonylphenyl) phosphite, tris(mono, di-mixed nonylphenyl) phosphite, diphenyl acid phosphite, 2,2'-methylenebis(4,6-di-t-butylphenyl)octyl phosphite, diphenyldecyl phosphite, phenyl diisodecyl phosphite, tributyl phosphite, tri(2-ethylhexyl) phosphite, tridecyl phosphite, trilauryl phosphite, dibutyl acid phosphite, dilauryl acid phosphite, trilauryl trithiophosphite, bis(neopentyl glycol)-1,4-cyclohexane dimethyl diphosphite, bis(2,4-di-t-butylphenyl)pentaerythritol diphosphite, bis(2,6-di-t-butyl-4-methylphenyl)pentaerythritol diphosphite, distearyl pentaerythritol diphosphite, phenyl-4,4'-isopropylidene diphenol-pentaerythritol diphosphite, a tetra(C12 to C15-mixed alkyl)-4,4'-isopropylidene diphenyl diphosphite, hydrogenated 4,4'-isopropylidene diphenol polyphosphite, bis(octylphenyl)-bis[4,4'-n-butylidenebis(2-t-butyl-5-methylphenol)]-1,6-hexanediol-diphosphite, tetratridecyl-4,4'-butylidenebis(2-t-butyl-5-methylphenol)diphosphite, hexa(tridecyl)-1,1,3-tris(2-methyl-5-t-butyl-4-hydroxyphenyl)butane-triphosphite, and 9,10-dihydro-9-oxa-10-phosphaphenanthrene-10-oxide. Of those, trilauryl phosphite, trisnonylphenyl phosphite, and monophenyl dioctyl phosphite are preferably used. The phosphite compounds may be used alone or in combination thereof.

The content of the phosphite compound in the liquid stabilizer may be set to any appropriate amount. The content of the phosphite compound is preferably from 0 wt% to 80 wt%, more preferably from 0 wt% to 60 wt% with respect to the total amount of the liquid stabilizer. When the liquid stabilizer further contains the phosphite compound within the above-mentioned ranges, various physical properties, such as transparency, color tone, and weatherability, of a molded article are further improved.

### A-7. Other Additives

The liquid stabilizer of the present invention may further contain any appropriate additive other than the oxidized polyethylene wax, the dispersion medium, the plasticizer, the zinc salt, the alkaline earth metal salt, the organotin compound, the dispersant, and the phosphite compound. Specific examples of the additive include a β-diketone compound or a metal salt thereof, an epoxy compound, a filler, a pigment, a dye, a cross-linking agent (or a reinforcing agent), an antistatic agent, an anti-plate out agent, a surface treatment agent, a lubricant, a flame retardant, a fluorescent agent, a fungicide, a bactericide, an antibacterial agent, a metal deactivator, a mold release agent, a processing aid, an antioxidant, a light stabilizer, and a blowing agent. The number, kinds, combination, compounding amounts, and the like of the additives may be appropriately set in accordance with purposes. When a vinyl chloride resin composition is used in the field of food packaging, an additive conforming to the "Voluntary Standards on Food Hygiene of PVC Resin Products" of Japan Hygienic PVC Association is preferably used.

Examples of the β-diketone compound include dibenzoylmethane, stearoylbenzoylmethane, palmitoylbenzoylmethane, benzoylacetone, and acetylacetone. Examples of the metal salt of the β-diketone compound include metal salts, such as a zinc salt, a calcium salt, a magnesium salt, and an aluminum salt, of those compounds.

Examples of the epoxy compound include: an epoxy compound of an animal or vegetable unsaturated oil and fat, such as an epoxidized soybean oil or an epoxidized linseed oil; an epoxy compound of an unsaturated fatty acid ester; an aromatic glycidyl ether and an aliphatic glycidyl ether; and an epoxy compound of a saturated alicyclic compound.

Examples of the antioxidant include a hindered phenol-based compound, a phosphite-based compound, a phosphonite-based compound, and a thioether-based compound.

Examples of the hindered phenol-based compound include α-tocopherol, butylhydroxytoluene, sinapyl alcohol, vitamin E, n-octadecyl-β-(4'-hydroxy-3',5'-di-tert-butylphenyl)propionate, 2-tert-butyl-6-(3'-tert-butyl-5'-methyl-2'-hydroxybenzyl)-4-methylphenyl acrylate, 2,6-di-tert-butyl-4-(N,N-dimethylaminomethyl)phenol, 3,5-di-tert-butyl-4-hydroxybenzylphosphonate diethyl ester, 2,2'-methylene-bis(4-methyl-6-tert-butylphenol), 2,2'-methylene-bis(4-ethyl-6-tertbutylphenol), 4,4'-methylene-bis(2,6-di-tert-butylphenol), 2,2'-methylene-bis(4-methyl-6-cyclohexylphenol), 2,2'-dimethylene-bis(6-α-methyl-benzyl-p-cresol), 2,2'-ethylidene-bis(4,6-di-tert-butylphenol), 2,2'-butylidene-bis(4-methyl-6-tert-butylphenol), 4,4'-butylidene-bis(3-methyl-6-tertbutylphenol), triethylene glycol-N-bis-3-(3-tert-butyl-4-hydroxy-5-methylphenyl)propionate, 1,6-hexanediol-bis[3-(3,5-di-tert-butyl-4-hydroxyphenyl)propionate], bis[2-tert-butyl-4-methyl-6-(3-tert-butyl-5-methyl-2-hydroxybenzyl)phenyl]terephthalate, 3,9-bis{2-[3-(3-tert-butyl-4-hydroxy-5-methylphenyl)propionyloxy]-1,1-dimethylethyl}-2,4,8,10-tetraoxaspiro[5,5]undecane, 4,4'-thiobis(6-tert-butyl-m-cresol), 4,4'-thiobis(3-methyl-6-tert-butylphenol), 2,2'-thiobis(4-methyl-6-tert-butylphenol), bis(3,5-di-tert-butyl-4-hydroxybenzyl)sulfide, 4,4'-di-thiobis(2,6-di-tert-butylphenol), 4,4'-tri-thiobis(2,6-di-tert-butylphenol), 2,2-thiodiethylene-bis-[3-(3,5-di-tert-butyl-4-hydroxyphenyl)propionate], 2,4-bis(n-octylthio)-6-(4-hydroxy-3',5'-di-tert-butylanilino)-1,3,5-triazine, N,N'-hexamethylenebis-(3,5-di-tert-butyl-4-hydroxyhydrocinnamide), N,N'-bis[3-(3,5-di-tert-butyl-4-hydroxyphenyl)propionyl]hydrazine, 1,1,3-tris(2-methyl-4-hydroxy-5-tert-butylphenyl)butane, 1,3,5-trimethyl-2,4,6-tris(3,5-di-tert-butyl-4-hydroxybenzyl)benzene, tris(3,5-di-tert-butyl-4-hydroxyphenyl)isocyanurate, tris(3,5-di-tert-butyl-4-hydroxybenzyl)isocyanurate, 1,3,5-tris(4-tert-butyl-3-hydroxy-2,6-dimethylbenzyl)isocyanurate, 1,3,5-tris-2-[3(3,5-di-tert-butyl-4-hydroxyphenyl)propionyloxy]ethyl isocyanurate, and tetrakis[methylene-3-(3',5'-di-tert-butyl-4-hydroxyphenyl)propionato]methane.

Examples of the phosphite-based compound include triphenyl phosphite, tris(nonylphenyl) phosphite, tridecyl phosphite, trioctyl phosphite, trioctadecyl phosphite, didecyl monophenyl phosphite, dioctyl monophenyl phosphite, diisopropyl monophenyl phosphite, monobutyl diphenyl phosphite, monodecyl diphenyl phosphite, monooctyl diphenyl phosphite, tris(diethylphenyl)phosphite, tris(di-isopropylphenyl)phosphite, tris(di-n-butylphenyl)phosphite, tris(2,4-di-tert-butylphenyl)phosphite, tris(2,6-di-tert-butylphenyl)phosphite, distearyl pentaerythritol diphosphite, bis(2,4-di-tert-butylphenyl)pentaerythritol diphosphite, bis(2,6-di-tert-butyl-4-methylphenyl)pentaerythritol diphosphite, bis(2,6-di-tert-butyl-4-ethylphenyl)pentaerythritol diphosphite, bis{2,4-bis(1-methyl-1-phenylethyl)phenyl}pentaerythritol diphosphite, phenyl bisphenol A pentaerythritol diphosphite, bis(nonylphenyl)pentaerythritol diphosphite, and dicyclohexyl pentaerythritol diphosphite. Other examples of the phosphite-based compound include compounds each of which reacts with a dihydric phenol and has a cyclic structure.

Examples of the phosphonite-based compound include tetrakis(2,4-di-tert-butylphenyl)-4,4'-biphenylene diphosphonite, tetrakis(2,4-di-tert-butylphenyl)-4,3'-biphenylene diphosphonite, tetrakis(2,4-di-tert-butylphenyl)-3,3'-biphenylene diphosphonite, tetrakis(2,6-di-tert-butylphenyl)-4,4'-biphenylene diphosphonite, tetrakis(2,6-di-tert-butylphenyl)-4,3'-biphenylene diphosphonite, tetrakis(2,6-di-tert-butylphenyl)-3,3'-biphenylene diphosphonite, bis(2,4-di-tert-butylphenyl)-4-phenyl-phenyl phosphonite, bis(2,4-di-tert-butylphenyl)-3-phenyl-phenyl phosphonite, bis(2,6-di-n-butylphenyl)-3-phenyl-phenyl phosphonite, bis(2,6-di-tert-butylphenyl)-4-phenyl-phenyl phosphonite, and bis(2,6-di-tert-butylphenyl)-3-phenyl-phenyl phosphonite.

Examples of the thioether-based compound include dilauryl thiodipropionate, ditridecyl thiodipropionate, dimyristyl thiodipropionate, distearyl thiodipropionate, pentaerythritol-tetrakis(3-laurylthiopropionate), pentaerythritol-tetrakis(3-dodecylthiopropionate), pentaerythritol-tetrakis(3-octadecylthiopropionate), pentaerythritol-tetrakis(3-myristylthiopropionate), and pentaerythritol-tetrakis(3-stearylthiopropionate).

Examples of the light stabilizer, which includes an UV absorber, include a benzophenone-based compound, a benzotriazole-based compound, an aromatic benzoate-based compound, an oxanilide-based compound, a cyanoacrylate-based compound, and a hindered amine-based compound.

Examples of the benzophenone-based compound include benzophenone, 2,4-dihydroxybenzophenone, 2,2'-dihydroxybenzophenone, 2,2',4,4'-tetrahydroxybenzophenone, 2-hydroxy-4-methoxybenzophenone, 2,2'-dihydroxy-4,4'-dimethoxybenzophenone, 2,2'-dihydroxy-4,4'-dimethoxy-5-sulfobenzophenone, 2-hydroxy-4-octoxybenzophenone, 2-hydroxy-4-dodecyloxybenzophenone, 2-hydroxy-4-methoxy-5-sulfobenzophenone, 5-chloro-2-hydroxybenzophenone, 2-hydroxy-4-octoxybenzophenone, 2-hydroxy-4-methoxy-2'-carboxybenzophenone, and 2-hydroxy-4-(2-hydroxy-3-methyl-acryloxyisopropoxy)benzophenone.

Examples of the benzotriazole-based compound include 2-(5-methyl-2-hydroxyphenyl)benzotriazole, 2-(3,5-di-tert-butyl-2-hydroxyphenyl)benzotriazole, 2-(3,5-di-tert-amyl-2-hydroxyphenyl)benzotriazole, 2-(3',5'-di-tert-butyl-4'-methyl-2'-hydroxyphenyl)benzotriazole, 2-(3,5-di-tert-amyl-2-hydroxyphenyl)-5-chlorobenzotriazole, 2-(5-tert-butyl-2-hydroxyphenyl)benzotriazole, 2-[2'-hydroxy-3',5'-bis(α,α-dimethylbenzyl)phenyl]benzotriazole, 2-[2'-hydroxy-3',5'-bis(α,α-dimethylbenzyl)phenyl]-2H-benzotriazole, and 2-(4'-octoxy-2'-hydroxyphenyl)benzotriazole.

Examples of the aromatic benzoate-based compound include alkylphenyl salicylates, such as p-tert-butylphenyl salicylate and p-octylphenyl salicylate.

Examples of the oxanilide-based compound include 2-ethoxy-2'-ethyloxalic acid bisanilide, 2-ethoxy-5-tert-butyl-2'-ethyloxalic acid bisanilide, and 2-ethoxy-3'-dodecyloxalic acid bisanilide.

Examples of the cyanoacrylate-based compound include ethyl-2-cyano-3,3'-diphenylacrylate, and 2-ethylhexyl-cyano-3,3'-diphenylacrylate.

Examples of the hindered amine-based compound include 4-acetoxy-2,2,6,6-tetramethylpiperidine, 4-stearoyloxy-2,2,6,6-tetramethylpiperidine, 4-acryloyloxy-2,2,6,6-tetramethylpiperidine, 4-(phenylacetoxy)-2,2,6,6-tetramethylpiperidine, 4-benzoyloxy-2,2,6,6-tetramethylpiperidine, 4-methoxy-2,2,6,6-tetramethylpiperidine, 4-octadecyloxy-2,2,6,6-tetramethylpiperidine, 4-cyclohexyloxy-2,2,6,6-tetramethylpiperidine, 4-benzyloxy-2,2,6,6-tetramethylpiperidine, 4-phenoxy-2,2,6,6-tetramethylpiperidine, 4-(ethylcarbamoyloxy)-2,2,6,6-tetramethylpiperidine, 4-(cyclohexylcarbamoyloxy)-2,2,6,6-tetramethylpiperidine, 4-(phenylcarbamoyloxy)-2,2,6,6-tetramethylpiperidine, bis(2,2,6,6-tetramethyl-4-piperidyl)carbonate, bis(2,2,6,6-tetramethyl-4-piperidyl)oxalate, bis(2,2,6,6-tetramethyl-4-piperidyl)malonate, bis(2,2,6,6-tetramethyl-4-piperidyl)sebacate, bis(2,2,6,6-tetramethyl-4-piperidyl)adipate, bis(2,2,6,6-tetramethyl-4-piperidyl)terephthalate, 1,2-bis(2,2,6,6-tetramethyl-4-piperidyloxy)-ethane, α,α'-bis(2,2,6,6-tetramethyl-4-piperidyloxy)-p-xylene, bis(2,2,6,6-tetramethyl-4-piperidyl)-tolylene-2,4-dicarbamate, bis(2,2,6,6-tetramethyl-4-piperidyl)-hexamethylene-1,6-dicarbamate, tris(2,2,6,6-tetramethyl-4-piperidyl)-benzene-1,3,5-tricarboxylate, tris(2,2,6,6-tetramethyl-4-piperidyl)-benzene-1,3,4-tricarboxylate, 1-2-{3-(3,5-di-tert-butyl-4-hydroxyphenyl) propionyloxy}-2,2,6,6-tetramethylpiperidine, and a condensate of 1,2,3,4-butanetetracarboxylic acid, 1,2,2,6,6-pentamethyl-4-piperidinol, and β,β,β',β'-tetramethyl-3,9-[2,4,8,10-tetraoxaspiro(5,5)undecane]dimethanol.

Examples of the lubricant may include a fatty acid, a paraffin, an aliphatic ketone, a partially saponified ester of a fatty acid, an ester of a fatty acid and a lower alcohol, an ester of a fatty acid and a polyhydric alcohol, an ester of a fatty acid and polyglycol, and a modified silicone.

Examples of the fatty acid include fatty acids each having 6 to 40 carbon atoms, such as oleic acid, stearic acid, lauric acid, hydroxystearic acid, behenic acid, arachidonic acid, linoleic acid, linolenic acid, palmitic acid, and montanic acid, and mixtures thereof.

Examples of the paraffin include paraffins each having 18 or more carbon atoms, such as liquid paraffin, natural paraffin, microcrystalline wax, and petrolatum.

An example of the partially saponified ester of a fatty acid is a partially saponified ester of montanic acid.

Examples of the ester of a fatty acid and a lower alcohol include a stearic acid ester, an oleic acid ester, a linoleic acid ester, a linolenic acid ester, an adipic acid ester, a behenic acid ester, an arachidonic acid ester, a montanic acid ester, and an isostearic acid ester.

Examples of the ester of a fatty acid and a polyhydric alcohol include glycerol tristearate, glycerol distearate, glycerol monostearate, pentaerythritol tetrastearate, pentaerythritol tristearate, pentaerythritol dimyristate, pentaerythritol monostearate, pentaerythritol adipate stearate, and sorbitan monobehenate.

Examples of the ester of a fatty acid and polyglycol include a polyethylene glycol fatty acid ester, a polytrimethylene glycol fatty acid ester, and a polypropylene glycol fatty acid ester.

Examples of the modified silicone include polyether-modified silicone, higher fatty acid alkoxy-modified silicone, higher fatty acid-containing silicone, higher fatty acid ester-modified silicone, methacrylate-modified silicone, and fluorine-modified silicone.

The content of the other additive may be set to any appropriate amount within a range in which the oxidized polyethylene wax can be satisfactorily dispersed in the liquid stabilizer.

### B. Manufacturing Method for Liquid Stabilizer for Chlorine-containing Resin

The liquid stabilizer for a chlorine-containing resin may be manufactured by any appropriate method. For example, the liquid stabilizer may be manufactured by a manufacturing method for a liquid stabilizer for a chlorine-containing resin of the present invention. The manufacturing method for a liquid stabilizer for a chlorine-containing resin of the present invention includes: mixing at least a dispersion medium and an oxidized polyethylene wax with each other at a temperature equal to or higher than the dropping point of the oxidized polyethylene wax; and cooling the mixture obtained by the mixing while stirring the mixture. When the dispersion medium and the oxidized polyethylene wax are mixed with each other at a temperature equal to or higher than the temperature (dropping point) at which the oxidized polyethylene wax becomes liquid, and then the mixture is cooled while being stirred, there can be obtained a liquid stabilizer in which the dispersoid including the oxidized polyethylene wax is dispersed with a smaller size. Further, in the liquid stabilizer to be obtained, the dispersion stability of the dispersoid (oxidized polyethylene wax) is improved, and hence a liquid stabilizer excellent in storage stability can be provided.

### B-1. Heating and Mixing

In the heating and mixing step, at least a dispersion medium and an oxidized polyethylene wax are mixed with each other at a temperature equal to or higher than the dropping point of the oxidized polyethylene wax. Specifically, first, the dispersion medium, the oxidized polyethylene wax, and other components to be added as required are mixed with each other at a temperature equal to or higher than the dropping point of the oxidized polyethylene wax. The mixing only needs to be performed in such a manner that the dispersion medium and the oxidized polyethylene wax are mixed with each other at a temperature equal to or higher than the dropping point of the oxidized polyethylene wax, and the mixing may be performed by any appropriate method. For example, the dispersion medium and the oxidized polyethylene wax may be loaded into a container at room temperature and then heated, or the dispersion medium and the oxidized polyethylene wax each of which has been heated to a temperature equal to or higher than the dropping point of the oxidized polyethylene wax in advance may be loaded into a container and mixed with each other. The dispersion medium and the oxidized polyethylene wax may be simultaneously loaded, or may be sequentially loaded. As described above, in one embodiment, the plasticizer also functions as a solvent. In this embodiment, it is preferred that the plasticizer be loaded, and then the oxidized polyethylene wax be loaded.

The heating of the dispersion medium and the oxidized polyethylene wax may be performed using any appropriate means. An example thereof is a tank made of a metal or a glass lining including a heating apparatus.

The heating is performed at such a temperature that the temperature of the mixture becomes equal to or higher than the dropping point of the oxidized polyethylene wax used. The heating is performed at preferably from the dropping point+0°C to the dropping point+30°C, more preferably from the dropping point+0°C to the dropping point+20°C. A heating time is, for example, from 5 minutes to 60 minutes, preferably from 5 minutes to 30 minutes. The heating is ended at a time point when the dissolution of the oxidized polyethylene wax in the dispersion medium is visually recognized. Specifically, the heating is ended at a time point when the dispersion medium and the oxidized polyethylene wax are mixed with each other to dissolve the oxidized polyethylene wax in the dispersion medium, resulting in a uniform and transparent state. Herein, the dissolution of the oxidized polyethylene wax means that the oxidized polyethylene wax has turned from a solid state to a liquid state and is dispersed in the dispersion medium.

The mixing of the dispersion medium and the oxidized polyethylene wax is performed using any appropriate means. For example, a stirring and emulsifying apparatus, such as a homomixer, a milder, a line mixer, CLEAMIX, AGI HOMO MIXER, HOMOMIC LINE FLOW, Disper Mixer, a reverse mixer, DYNO-MILL, SC mill, or Star mill LMZ, is used. Of those, a milder or a line mixer is preferably used. Mixing treatment, such as stirring, may be performed while the dispersion medium and the oxidized polyethylene wax are heated, or mixing treatment, such as stirring, may be performed after the dispersion medium and the oxidized polyethylene wax have been heated to dissolve the oxidized polyethylene wax in the dispersion medium. It is preferred to perform the heating under stirring because uniform heating is achieved.

### B-2. Stirring and Cooling

After the dispersion medium and the oxidized polyethylene wax have been heated and mixed with each other, the resultant mixture is cooled while being stirred. When the mixture is cooled while being stirred, the oxidized polyethylene wax can be finely dispersed in the dispersion medium. Further, the dispersion stability of the dispersed oxidized polyethylene wax (dispersoid) can also be improved.

Stirring and dispersing means used for the mixing may be used for the stirring. It is preferred to use a highspeed stirring disperser based on stirring or a dispersion pulverizer configured to use dispersion media, such as a homomixer, a milder, a high-flex disperser (e.g., HIGH-FLEX DISPERSER HG-2 Generator Type, manufactured by SMT Co., Ltd.), or a Dyno-Mill. The use of any such means enables the mixture to be vigorously stirred, and hence enables the oxidized polyethylene wax to be dispersed with a smaller median diameter (D₅₀). In addition, when stirring and dispersing means including a stirring blade is used, the stirring and dispersing means preferably includes a stirring blade of a shape having a high shear force.

The number of rotations of a stirring and dispersing apparatus in the stirring may be set to any appropriate range in accordance with the stirring and dispersing apparatus to be used, the shape of the stirring blade, and the presence or absence of the use of an additive other than the dispersion medium and the oxidized polyethylene wax, such as a dispersant. For example, the number of rotations is from 300 rpm to 15,000 rpm, preferably from 300 rpm to 10,000 rpm. When such number of rotations is adopted, the oxidized polyethylene wax can be satisfactorily dispersed.

The stirring and cooling of the mixture may be performed at room temperature until the mixture reaches any appropriate temperature, or the stirring may be performed while the mixture is cooled by any appropriate cooling means. Any appropriate method may be used as the cooling means. The stirring may be performed while cooling the container with, for example: water, such as deionized water, distilled water, soft water, or RO water; ice; an alcohol, such as ethylene glycol, propylene glycol, ethanol, methanol, or isopropyl alcohol; coolant; or a commercially available refrigerant, such as Nybrine (trademark, manufactured by Tokyo Rikakikai Co., Ltd.), Fluorinert (trademark, manufactured by 3M Company), or Galden (trademark, manufactured by Solvay).

The stirring and cooling is performed until the temperature of the mixture becomes preferably 90°C or less, more preferably 80°C or less, still more preferably 60°C or less. When the stirring and cooling is performed until the temperature of the mixture falls within the above-mentioned ranges, the oxidized polyethylene wax can be more finely dispersed. The temperature of the mixture in the stirring and cooling is, for example, 30°C or more.

The treatment time of the stirring and cooling, which only needs to be performed until the mixture reaches the above-mentioned temperature, may be set to any appropriate time. In one embodiment, the mixture is preferably cooled at a higher cooling rate to a lower temperature. When the cooling treatment is performed in such manner, the oxidized polyethylene wax can be dispersed in a state of having a smaller median diameter (D₅₀) . The reason therefor is not clear, but is conceivably that, when such cooling treatment is performed, a degree of supersaturation at which the oxidized polyethylene wax dissolved in the dispersion medium is precipitated is increased. From the standpoint of production cost, the treatment time is, for example, from 1 second to 3 hours, preferably from 1 second to 1 hour. In addition, the stirring treatment may be continued even after the temperature of the mixture becomes the above-mentioned temperature.

As described above, the liquid stabilizer for a chlorine-containing resin may contain any appropriate other component in addition to the dispersion medium and the oxidized polyethylene wax. For example, the liquid stabilizer may contain: a zinc salt, an alkaline earth metal salt, and/or an organotin compound; a dispersant; a phosphite compound; an antioxidant; a UV absorber; and an organic solvent. Those other components may each be loaded into the container at any appropriate stage in the manufacturing process of the liquid stabilizer. For example, the liquid stabilizer may be manufactured by adding those other components to the dispersion medium and the oxidized polyethylene wax before the heating, the liquid stabilizer may be manufactured by adding those other components to the mixture after the heating, and performing the stirring and cooling treatment, or the liquid stabilizer may be manufactured by adding and mixing those other components into the added materials after the heating and the stirring and cooling treatment. When the dispersant is used, the dispersant is preferably added before the heating of the dispersion medium and the oxidized polyethylene wax. When the dispersant is added before the heating, the effect of the use of the dispersant can be further exhibited.

### B-3. Other Steps

The manufacturing method may include any appropriate other treatment step in addition to the heating treatment and the stirring and cooling treatment. For example, filtration treatment may be performed to remove the oxidized polyethylene wax larger than a desired size, impurities, and the like from the mixture. Filtration may be performed using, for example, a wire mesh having any appropriate mesh size. The mesh size of the wire mesh is preferably from 10 mesh to 100 mesh, more preferably from 50 mesh to 100 mesh. Other than the filtration treatment, the manufacturing method may further include a stirring and pulverizing step, a diluting step, or a concentrating step.

### C. Chlorine-containing Resin Composition

The liquid stabilizer for a chlorine-containing resin can improve releasability without impairing transparency. Accordingly, the liquid stabilizer can be suitably used for a chlorine-containing resin composition to be used in various applications. In addition, the liquid stabilizer for a chlorine-containing resin can be allowed to have little toxicity and little odor through adjustment of its composition. Accordingly, the liquid stabilizer can also be suitably used in an application such as food packaging.

### C-1. Liquid Stabilizer for Chlorine-containing Resin

In the chlorine-containing resin composition, the liquid stabilizer may be used in any appropriate amount. The content of the liquid stabilizer is preferably from 0.5 part by weight to 5 parts by weight, more preferably from 1 part by weight to 3 parts by weight with respect to 100 parts by weight of the chlorine-containing resin. When the content of the liquid stabilizer is set to fall within the above-mentioned ranges, a chlorine-containing resin composition excellent in transparency and releasability is obtained. When the content of the liquid stabilizer is less than 0.5 part by weight, there is a risk in that the effect of the addition of the liquid stabilizer may not be sufficiently obtained. In addition, when the content of the liquid stabilizer is more than 5 parts by weight, cost is increased, and there is a risk in that bleeding may occur when the resin composition is subjected to extrusion molding.

### C-2. Chlorine-containing Resin

Any appropriate resin containing a chlorine atom may be used as the chlorine-containing resin. A vinyl chloride-based resin is preferred because the vinyl chloride-based resin is excellent in flexibility and flame retardancy and is used in various applications. Examples of the vinyl chloride-based resin include pentachlorinated polyvinyl chloride, a vinyl chloride-vinyl acetate copolymer, a vinyl chloride-ethylene copolymer, a vinyl chloride-propylene copolymer, a vinyl chloride-styrene copolymer, a vinyl chloride-isobutylene copolymer, a vinyl chloride-vinylidene chloride copolymer, a vinyl chloride-styrene-maleic anhydride terpolymer, a vinyl chloride-alkyl, cycloalkyl, or aryl maleimide copolymer, a vinyl chloride-styrene-acrylonitrile copolymer, a vinyl chloride-butadiene copolymer, a vinyl chloride-isoprene copolymer, a vinyl chloride-chlorinated propylene copolymer, a vinyl chloride-vinylidene chloride-vinyl acetate terpolymer, a vinyl chloride-acrylic acid ester copolymer, a vinyl chloride-maleic acid ester copolymer, a vinyl chloride-methacrylic acid ester copolymer, a vinyl chloride-acrylonitrile copolymer, and a vinyl chloride-urethane copolymer. Those vinyl chloride-based resins may be used alone or in combination thereof.

The polymerization degree of the vinyl chloride-based resin is preferably from 700 to 2,000. When the polymerization degree of the vinyl chloride-based resin falls within such range, the composition is excellent in moldability into a film and a sheet, and a film and a sheet each excellent in balance between its strength and touch feeling are obtained.

### C-3. Plasticizer

Any appropriate compound may be used as the plasticizer. Examples thereof include a terephthalate, a phthalate, an adipate, and a trimellitate. The plasticizers may be used alone or in combination thereof. A plasticizer identical to the plasticizer to be incorporated into the liquid stabilizer may be used, or a different plasticizer may be used.

When a vinyl chloride-based resin composition is used for processing into films and sheets, the content of the plasticizer in the vinyl chloride-based resin composition is preferably 10 parts by weight or more, more preferably 20 parts by weight or more, still more preferably 30 parts by weight or more with respect to 100 parts by weight of the vinyl chloride-based resin. In addition, the content of the plasticizer is, for example, 80 parts by weight or less. In addition, when the vinyl chloride-based resin composition is used for processing into vinyl goods and electric wire-coating materials, the content of the plasticizer in the vinyl chloride-based resin composition is preferably 10 parts by weight or more and 80 parts by weight or less, more preferably 20 parts by weight or more and 60 parts by weight or less with respect to 100 parts by weight of the vinyl chloride-based resin.

### C-4. Other Additives

The chlorine-containing resin composition may further contain any appropriate additive in addition to the chlorine-containing resin and the liquid stabilizer for a chlorine-containing resin. Specific examples of the additive include a β-diketone compound or a metal salt thereof, an epoxy compound, a filler, a pigment, a dye, a cross-linking agent (or a reinforcing agent), an antistatic agent, an anti-plate out agent, a surface treatment agent, a lubricant, a flame retardant, a fluorescent agent, a fungicide, a bactericide, an antibacterial agent, a metal deactivator, a mold release agent, a processing aid, an antioxidant, a light stabilizer, and a blowing agent. The number, kinds, combination, compounding amounts, and the like of the additives may be appropriately set in accordance with purposes. When the vinyl chloride-based resin composition is used in the field of food packaging, an additive conforming to the "Voluntary Standards on Food Hygiene of PVC Resin Products" of Japan Hygienic PVC Association is preferably used. Details of those additives are described in detail in, for example, JP 6179740 B1, the description of which is incorporated herein by reference.

### D. Molded Body

The vinyl chloride-based resin composition is used in any appropriate application. The vinyl chloride-based resin composition containing the liquid stabilizer for a chlorine-containing resin of the present invention has excellent transparency and releasability. Accordingly, the vinyl chloride-based resin composition can be suitably used for a molded body to be manufactured using a die or the like.

The vinyl chloride-based resin composition can be used in, for example, a film, a sheet, a packaging container (e.g., a tray), an electric wire-coating material, an interior or exterior material for an automobile, an agricultural material (e.g., a plastic greenhouse), a hose, a pipe, a wall material, a floor material, sailcloth, leather, a toy, a rubber glove, or a rubber boot. The resin composition containing the liquid stabilizer of the present invention can be preferably used in a film or a sheet, and can be more preferably used in a sheet for food packaging or a stretch film for food packaging. The vinyl chloride-based resin composition is excellent in transparency and releasability. Accordingly, plate-out during long-run processing can be prevented, resulting in an improvement in productivity. Further, the vinyl chloride-based resin composition is also excellent in transparency, and hence can be suitably used for a sheet for food packaging or a stretch film for food packaging.

When the vinyl chloride-based resin composition is used in a food packaging application (e.g., a sheet for food packaging or a stretch film for food packaging), the liquid stabilizer in the composition is preferably free of any of an overbased carboxylate and an overbased alkaline earth metal complex from the viewpoint of safety. However, a case in which the stabilizer contains the carboxylate or the complex as an inevitable by-product may occur.

Any appropriate molding method may be adopted as a method of molding the vinyl chloride-based resin composition in accordance with, for example, the applications of the molded body and a desired shape thereof. Specific examples thereof include extrusion, injection, calendering, inflation, and dipping. Extrusion or calendering is preferred as a method of molding a film and a sheet. As described above, the resin composition containing the liquid stabilizer of the present invention is excellent in releasability, and hence, even when used for extrusion molding, can prevent, for example, the adhesion of the resin composition to a die.

When the vinyl chloride-based resin composition is used in a food packaging application (e.g., a sheet for food packaging or a stretch film for food packaging), the molded body is preferably transparent. In more detail, the haze value of the molded body is preferably 15 or less, more preferably 10 or less. The haze value is determined by a method described in Examples to be described later.

### Examples

Now, the present invention is specifically described by way of Examples. However, the present invention is not limited by these Examples.

### [Example 1]

55.9 Parts by weight of a dispersion medium (terephthalate (DOTP) (plasticizer), manufactured by J-PLUS Co., Ltd., product name: DOTP), 2.1 parts by weight of an oxidized polyethylene wax 1 (manufactured by Honeywell, product name: A-C 316A, acid value: 16 mgKOH/g, density: 0.98 g/cm³, dropping point: 140°C), and 30 parts by weight of a phosphite compound (trilauryl phosphite, manufactured by Johoku Chemical Co., Ltd., product name: JP-312L) were loaded into a 300 mL glass flask and heated to 145°C, and the temperature was held for 20 minutes. It was visually recognized that the dispersion medium and the oxidized polyethylene wax had been mixed with each other to dissolve the oxidized polyethylene wax in the dispersion medium, resulting in a transparent and uniform mixture. Then, the mixture was cooled to 80°C over 30 minutes while being stirred under the condition of 1,500 rpm through use of a stirring machine (manufactured by SMT Co., Ltd., product name: HIGH-FLEX DISPERSER HG-2 Generator Type) (stirring and cooling step). After the cooling, 12 parts by weight of zinc oleate (manufactured by Sakai Chemical Industry Co., Ltd.) was loaded, and the contents were further mixed. Then, the mixture was filtered through a wire mesh (mesh size: 80 mesh) to provide a liquid stabilizer 1.

### [Example 2]

57.3 Parts by weight of a dispersion medium (terephthalate (DOTP) (plasticizer), manufactured by J-PLUS Co., Ltd., product name: DOTP), 0.7 part by weight of an oxidized polyethylene wax 1 (manufactured by Honeywell, product name: A-C 316A, acid value: 16 mgKOH/g, density: 0.98 g/cm³, dropping point: 140°C), and 30 parts by weight of a phosphite compound (trilauryl phosphite, manufactured by Johoku Chemical Co., Ltd., product name: JP-312L) were loaded into a 300 mL glass flask and heated to 145°C, and the temperature was held for 15 minutes. It was visually recognized that the dispersion medium and the oxidized polyethylene wax had been mixed with each other to dissolve the oxidized polyethylene wax in the dispersion medium, resulting in a transparent and uniform mixture. Then, the mixture was cooled to 80°C over 10 minutes while being stirred under the condition of 1,500 rpm through use of a stirring machine (manufactured by SMT Co., Ltd., product name: HIGH-FLEX DISPERSER HG-2 Generator Type) (stirring and cooling step). After the cooling, 12 parts by weight of zinc oleate (manufactured by Sakai Chemical Industry Co., Ltd.) was loaded, and the contents were further mixed. Then, the mixture was filtered through a wire mesh (mesh size: 80 mesh) to provide a liquid stabilizer 2.

### [Example 3]

56.6 Parts by weight of a dispersion medium (terephthalate (DOTP) (plasticizer), manufactured by J-PLUS Co., Ltd., product name: DOTP), 1.4 parts by weight of an oxidized polyethylene wax 1 (manufactured by Honeywell, product name: A-C 316A, acid value: 16 mgKOH/g, density: 0.98 g/cm³, dropping point: 140°C), and 30 parts by weight of a phosphite compound (trilauryl phosphite, manufactured by Johoku Chemical Co., Ltd., product name: JP-312L) were loaded into a 300 mL glass flask and heated to 145°C, and the temperature was held for 15 minutes. It was visually recognized that the dispersion medium and the oxidized polyethylene wax had been mixed with each other to dissolve the oxidized polyethylene wax in the dispersion medium, resulting in a transparent and uniform mixture. Then, the mixture was cooled to 80°C over 10 minutes while being stirred under the condition of 1,500 rpm through use of a stirring machine (manufactured by SMT Co., Ltd., product name: HIGH-FLEX DISPERSER HG-2 Generator Type) (stirring and cooling step). After the cooling, 12 parts by weight of zinc oleate (manufactured by Sakai Chemical Industry Co., Ltd.) was loaded, and the contents were further mixed. Then, the mixture was filtered through a wire mesh (mesh size: 80 mesh) to provide a liquid stabilizer 3.

### [Example 4]

55.9 Parts by weight of a dispersion medium (terephthalate (DOTP) (plasticizer), manufactured by J-PLUS Co., Ltd., product name: DOTP), 2.1 parts by weight of an oxidized polyethylene wax 1 (manufactured by Honeywell, product name: A-C 316A, acid value: 16 mgKOH/g, density: 0.98 g/cm³, dropping point: 140°C), and 30 parts by weight of a phosphite compound (trilauryl phosphite, manufactured by Johoku Chemical Co., Ltd., product name: JP-312L) were loaded into a 300 mL glass flask and heated to 145°C, and the temperature was held for 20 minutes. It was visually recognized that the dispersion medium and the oxidized polyethylene wax had been mixed with each other to dissolve the oxidized polyethylene wax in the dispersion medium, resulting in a transparent and uniform mixture. Then, the mixture was cooled to 80°C over 30 minutes while being stirred under the condition of 1,500 rpm through use of a stirring machine (manufactured by SMT Co., Ltd., product name: HIGH-FLEX DISPERSER HG-2 Generator Type) (stirring and cooling step). After the cooling, 12 parts by weight of zinc oleate (manufactured by Sakai Chemical Industry Co., Ltd.) was loaded, and the contents were mixed. Then, 0.1 part by weight of a decaglycerol monoester (manufactured by Sakamoto Yakuhin Kogyo Co., Ltd., product name: SY-Glyster ML-750) was further added as a dispersant, and the contents were mixed and then filtered through a wire mesh (mesh size: 80 mesh) to provide a liquid stabilizer 4.

### [Example 5]

53 Parts by weight of a dispersion medium (terephthalate (DOTP) (plasticizer), manufactured by J-PLUS Co., Ltd., product name: DOTP), 5 parts by weight of an oxidized polyethylene wax 1 (manufactured by Honeywell, product name: A-C 316A, acid value: 16 mgKOH/g, density: 0.98 g/cm³, dropping point: 140°C), and 30 parts by weight of a phosphite compound (trilauryl phosphite, manufactured by Johoku Chemical Co., Ltd., product name: JP-312L) were loaded into a 300 mL glass flask and heated to 145°C, and the temperature was held for 30 minutes. It was visually recognized that the dispersion medium and the oxidized polyethylene wax had been mixed with each other to dissolve the oxidized polyethylene wax in the dispersion medium, resulting in a transparent and uniform mixture. Then, the mixture was cooled to 80°C over 30 minutes while being stirred under the condition of 1,500 rpm through use of a stirring machine (manufactured by SMT Co., Ltd., product name: HIGH-FLEX DISPERSER HG-2 Generator Type) (stirring and cooling step). After the cooling, 12 parts by weight of zinc oleate (manufactured by Sakai Chemical Industry Co., Ltd.) was loaded, and the contents were further mixed. Then, the mixture was filtered through a wire mesh (mesh size: 80 mesh) to provide a liquid stabilizer 5.

### [Example 6]

48 Parts by weight of a dispersion medium (terephthalate (DOTP) (plasticizer), manufactured by J-PLUS Co., Ltd., product name: DOTP), 10 parts by weight of an oxidized polyethylene wax 1 (manufactured by Honeywell, product name: A-C 316A, acid value: 16 mgKOH/g, density: 0.98 g/cm³, dropping point: 140°C), and 30 parts by weight of a phosphite compound (trilauryl phosphite, manufactured by Johoku Chemical Co., Ltd., product name: JP-312L) were loaded into a 300 mL glass flask and heated to 145°C, and the temperature was held for 60 minutes. It was visually recognized that the dispersion medium and the oxidized polyethylene wax had been mixed with each other to dissolve the oxidized polyethylene wax in the dispersion medium, resulting in a transparent and uniform mixture. Then, the mixture was cooled to 80°C over 60 minutes while being stirred under the condition of 1,500 rpm through use of a stirring machine (manufactured by SMT Co., Ltd., product name: HIGH-FLEX DISPERSER HG-2 Generator Type) (stirring and cooling step). After the cooling, 12 parts by weight of zinc oleate (manufactured by Sakai Chemical Industry Co., Ltd.) was loaded, and the contents were further mixed. Then, the mixture was filtered through a wire mesh (mesh size: 80 mesh) to provide a liquid stabilizer 6.

### [Example 7]

55.9 Parts by weight of a dispersion medium (terephthalate (DOTP) (plasticizer), manufactured by J-PLUS Co., Ltd., product name: DOTP), 2.1 parts by weight of an oxidized polyethylene wax 2 (manufactured by Honeywell, product name: A-C 307A, acid value: 7 mgKOH/g, density: 0.98 g/cm³, dropping point: 140°C), and 30 parts by weight of a phosphite compound (trilauryl phosphite, manufactured by Johoku Chemical Co., Ltd., product name: JP-312L) were loaded into a 300 mL glass flask and heated to 145°C, and the temperature was held for 20 minutes. It was visually recognized that the dispersion medium and the oxidized polyethylene wax had been mixed with each other to dissolve the oxidized polyethylene wax in the dispersion medium, resulting in a transparent and uniform mixture. Then, the mixture was cooled to 80°C over 30 minutes while being stirred under the condition of 1,500 rpm through use of a stirring machine (manufactured by SMT Co., Ltd., product name: HIGH-FLEX DISPERSER HG-2 Generator Type) (stirring and cooling step). After the cooling, 12 parts by weight of zinc oleate (manufactured by Sakai Chemical Industry Co., Ltd.) was loaded, and the contents were further mixed. Then, the mixture was filtered through a wire mesh (mesh size: 80 mesh) to provide a liquid stabilizer 7.

### [Example 8]

55.9 Parts by weight of a dispersion medium (terephthalate (DOTP) (plasticizer), manufactured by J-PLUS Co., Ltd., product name: DOTP), 2.1 parts by weight of an oxidized polyethylene wax 3 (manufactured by Honeywell, product name: A-C 325A, acid value: 25 mgKOH/g, density: 0.99 g/cm³, dropping point: 136°C), and 30 parts by weight of a phosphite compound (trilauryl phosphite, manufactured by Johoku Chemical Co., Ltd., product name: JP-312L) were loaded into a 300 mL glass flask and heated to 145°C, and the temperature was held for 20 minutes. It was visually recognized that the dispersion medium and the oxidized polyethylene wax had been mixed with each other to dissolve the oxidized polyethylene wax in the dispersion medium, resulting in a transparent and uniform mixture. Then, the mixture was cooled to 80°C over 30 minutes while being stirred under the condition of 1,500 rpm through use of a stirring machine (manufactured by SMT Co., Ltd., product name: HIGH-FLEX DISPERSER HG-2 Generator Type) (stirring and cooling step). After the cooling, 12 parts by weight of zinc oleate (manufactured by Sakai Chemical Industry Co., Ltd.) was loaded, and the contents were further mixed. Then, the mixture was filtered through a wire mesh (mesh size: 80 mesh) to provide a liquid stabilizer 8.

### [Example 9]

55.9 Parts by weight of a dispersion medium (terephthalate (DOTP) (plasticizer), manufactured by J-PLUS Co., Ltd., product name: DOTP), 2.1 parts by weight of an oxidized polyethylene wax 4 (manufactured by Honeywell, product name: A-C 392, acid value: 30 mgKOH/g, density: 0.99 g/cm³, dropping point: 138°C), and 30 parts by weight of a phosphite compound (trilauryl phosphite, manufactured by Johoku Chemical Co., Ltd., product name: JP-312L) were loaded into a 300 mL glass flask and heated to 145°C, and the temperature was held for 20 minutes. It was visually recognized that the dispersion medium and the oxidized polyethylene wax had been mixed with each other to dissolve the oxidized polyethylene wax in the dispersion medium, resulting in a transparent and uniform mixture. Then, the mixture was cooled to 80°C over 30 minutes while being stirred under the condition of 1,500 rpm through use of a stirring machine (manufactured by SMT Co., Ltd., product name: HIGH-FLEX DISPERSER HG-2 Generator Type) (stirring and cooling step). After the cooling, 12 parts by weight of zinc oleate (manufactured by Sakai Chemical Industry Co., Ltd.) was loaded, and the contents were further mixed. Then, the mixture was filtered through a wire mesh (mesh size: 80 mesh) to provide a liquid stabilizer 9.

### [Example 10]

55.9 Parts by weight of a dispersion medium (terephthalate (DOTP) (plasticizer), manufactured by J-PLUS Co., Ltd., product name: DOTP), 2.1 parts by weight of an oxidized polyethylene wax 5 (manufactured by Honeywell, product name: A-C 395A, acid value: 41 mgKOH/g, density: 1.00 g/cm³, dropping point: 137°C), and 30 parts by weight of a phosphite compound (trilauryl phosphite, manufactured by Johoku Chemical Co., Ltd., product name: JP-312L) were loaded into a 300 mL glass flask and heated to 145°C, and the temperature was held for 20 minutes. It was visually recognized that the dispersion medium and the oxidized polyethylene wax had been mixed with each other to dissolve the oxidized polyethylene wax in the dispersion medium, resulting in a transparent and uniform mixture. Then, the mixture was cooled to 80°C over 30 minutes while being stirred under the condition of 1,500 rpm through use of a stirring machine (manufactured by SMT Co., Ltd., product name: HIGH-FLEX DISPERSER HG-2 Generator Type) (stirring and cooling step). After the cooling, 12 parts by weight of zinc oleate (manufactured by Sakai Chemical Industry Co., Ltd.) was loaded, and the contents were further mixed. Then, the mixture was filtered through a wire mesh (mesh size: 80 mesh) to provide a liquid stabilizer 10.

### [Example 11]

55.9 Parts by weight of a dispersion medium (terephthalate (DOTP) (plasticizer), manufactured by J-PLUS Co., Ltd., product name: DOTP), 2.1 parts by weight of an oxidized polyethylene wax 6 (manufactured by Honeywell, product name: A-C 6702, acid value: 15 mgKOH/g, density: 0.85 g/cm³, dropping point: 88°C), and 30 parts by weight of a phosphite compound (trilauryl phosphite, manufactured by Johoku Chemical Co., Ltd., product name: JP-312L) were loaded into a 300 mL glass flask and heated to 145°C, and the temperature was held for 20 minutes. It was visually recognized that the dispersion medium and the oxidized polyethylene wax had been mixed with each other to dissolve the oxidized polyethylene wax in the dispersion medium, resulting in a transparent and uniform mixture. Then, the mixture was cooled to 80°C over 30 minutes while being stirred under the condition of 1,500 rpm through use of a stirring machine (manufactured by SMT Co., Ltd., product name: HIGH-FLEX DISPERSER HG-2 Generator Type) (stirring and cooling step). After the cooling, 12 parts by weight of zinc oleate (manufactured by Sakai Chemical Industry Co., Ltd.) was loaded, and the contents were further mixed. Then, the mixture was filtered through a wire mesh (mesh size: 80 mesh) to provide a liquid stabilizer 11.

### [Example 12]

A liquid stabilizer 12 was obtained in the same manner as in Example 4 except that a petroleum-based hydrocarbon (manufactured by JXTG Nippon Oil & Energy Corporation, product name: AF Solvent No. 4) was used in place of DOTP as the dispersion medium.

### [Example 13]

A liquid stabilizer 13 was obtained in the same manner as in Example 4 except that an alkylbenzene (manufactured by Shell Japan Limited, product name: Shellsol A150) was used in place of DOTP as the dispersion medium.

### (Comparative Example 1)

58 Parts by weight of a dispersion medium (terephthalate (DOTP) (plasticizer), manufactured by J-PLUS Co., Ltd., product name: DOTP) and 30 parts by weight of a phosphite compound (trilauryl phosphite, manufactured by Johoku Chemical Co., Ltd., product name: JP-312L) were loaded into a 300 mL glass flask and heated to 145°C, and the temperature was held for 20 minutes. It was recognized that the mixture had become transparent and uniform. Then, the mixture was left to stand still to cool to 80°C (without the stirring and cooling step). After the cooling, 12 parts by weight of zinc oleate (manufactured by Sakai Chemical Industry Co., Ltd.) was loaded, and the contents were mixed. Then, the mixture was filtered through a wire mesh (mesh size: 80 mesh) to provide a liquid stabilizer C1.

### (Comparative Example 2)

55.9 Parts by weight of a dispersion medium (terephthalate (DOTP) (plasticizer), manufactured by J-PLUS Co., Ltd., product name: DOTP), 2.1 parts by weight of an oxidized polyethylene wax 1 (manufactured by Honeywell, product name: A-C 316A, acid value: 16 mgKOH/g, density: 0.98 g/cm³, dropping point: 140°C), and 30 parts by weight of a phosphite compound (trilauryl phosphite, manufactured by Johoku Chemical Co., Ltd., product name: JP-312L) were loaded into a 300 mL glass flask and heated to 145°C, and the temperature was held for 20 minutes. It was visually recognized that the dispersion medium and the oxidized polyethylene wax had been mixed with each other to dissolve the oxidized polyethylene wax in the dispersion medium, resulting in a transparent and uniform mixture. Then, the mixture was left to stand still to cool to 80°C (without the stirring and cooling step). After the cooling, 12 parts by weight of zinc oleate (manufactured by Sakai Chemical Industry Co., Ltd.) was loaded, and the contents were mixed. Then, the mixture was filtered through a wire mesh (mesh size: 80 mesh) to provide a liquid stabilizer C2.

### (Comparative Example 3)

A liquid stabilizer C3 was obtained in the same manner as in Example 1 except that a polyethylene wax (manufactured by Honeywell, product name: A-C 6A, density: 0.92 g/cm³, dropping point: 106°C) was used in place of the oxidized polyethylene wax 1.

### <Evaluation>

The following evaluations were performed using the liquid stabilizers obtained in Examples 1 to 13 and Comparative Examples 1 to 3. The results are shown in Table 1.

### 1. Measurement of Median Diameter D₅₀ of Dispersoid

Each obtained liquid stabilizer was diluted with ethanol serving as a dispersion medium, and the median diameter (D₅₀) of the dispersoid was measured using a laser diffraction/scattering particle diameter distribution measurement apparatus (manufactured by Horiba, Ltd., product name: LA-950) under the following conditions with a batch cell (model number: FRANCTON CELL for LA-950).

### <Measurement Conditions>

Dispersion medium: ethanol
Measurement upper limit: 3,000 µm
Measurement lower limit: 0.01 µm
Particle refractive index: 1.46
Particle shape: non-spherical
Solvent refractive index: 1.36

### 2. Dispersion Stability

Each obtained liquid stabilizer was loaded into a centrifuge tube (diameter: 15 mm, length: 90 mm, model number: 9820ST 15-90NP), and was subjected to centrifugal treatment with a centrifugal separator (manufactured by Kokusan Co., Ltd., product name: H-500R) under the conditions of 3,000 rpm for 30 minutes. After the centrifugal treatment, the resultant was left to stand still for 10 minutes, and the presence or absence of settling was determined. A case in which settling was not found was marked with Symbol "○", and a case in which settling was found was marked with Symbol "×".

### 3. Press Transparency (Haze Value)

100 Parts by weight of a vinyl chloride resin (manufactured by Shin-Etsu Chemical Co., Ltd., product name: TK-1300) was mixed with 30 parts by weight of a terephthalate (manufactured by J-PLUS Co., Ltd., product name: DOTP), 5 parts by weight of an epoxidized soybean oil (ESBO) (manufactured by Sakai Chemical Industry Co., Ltd., product name: INBRAFLEX A-6), and 1.5 parts by weight of the liquid stabilizer obtained in each of Examples 1 to 13 or Comparative Examples 1 to 3 to prepare a vinyl chloride-based resin composition.

Each vinyl chloride-based resin composition was kneaded with an 8-inch roll machine adjusted to a roll surface temperature of 175°C and a roll gap of from 0.3 mm to 0.5 mm (manufactured by Kansai Roll Co., Ltd.) for 5 minutes to produce roll sheets each having a thickness of 0.3 mm. 20 of the resultant sheets were superimposed on one another and held at 100 kg/cm² for 10 minutes so as to have a thickness of 5 mm through use of a pressing machine set to a surface temperature of 160°C (manufactured by Toyo Seiki Seisaku-sho, Ltd., product name: MINI TEST PRESS-10). Thus, a test piece was produced. Then, the haze value (turbidity) of the resultant test piece was measured with a spectrocolorimeter (manufactured by Nippon Denshoku Industries Co., Ltd., product name: SQ-2000), and was used as an indication of transparency.

### 4. Plate-out Property

The DOTP, the ESBO, and the liquid stabilizer obtained in each of Examples 1 to 13 or Comparative Examples 1 to 3 were weighed in amounts of 900 g, 150 g, and 45 g, respectively, with respect to 3 kg of a vinyl chloride-based resin. The materials were loaded into a Henschel mixer (manufactured by Nippon Coke & Engineering Co., Ltd., product name: Henschel Mixer, Model FM), mixed with each other through use of a blade rotated at 2,000 rpm, and discharged from the Henschel mixer at a time point when the temperature of the mixture became 120°C.

The discharged mixture was subjected to molding evaluation with a LABO extruder (manufactured by Toyo Seiki Seisaku-sho, Ltd., conical 2D20C model, extrusion conditions: C1: 160°C, C2: 170°C, C3: 180°C, AD: 190°C, die: for sheet die) for 5 hours. The state of occurrence of adhering matter (plate-out) on the die and a lip was visually recognized during the sheet molding, and evaluation was performed by the following criteria. Plate-out occurs in association with thermal decomposition of a composition, and hence its tendency in terms thermal stability can also be recognized.

4: No adhering matter was recognized on the die and the lip either during the molding or after the completion of the molding.

3: No adhering matter was recognized on the die and the lip during the molding, but small amounts of adhering matter were recognized on the die and the lip after the completion of the molding evaluation. The molded sheet was not recognized to have any abnormality such as adhering matter.

2: Adhering matter occurred on the die and the lip during the molding, but the molded sheet was not recognized to have adhering matter.

1: Adhering matter occurred over the entire surfaces of the die and the lip during the molding, and the molded sheet was also recognized to have adhering matter detached from the die or the lip.

**Table 1**

| | Dispersion medium | | Oxidized polyethylene wax | | | Dispersant (part (s) by weight) | Presence or absence of stirring and cooling treatment | Median diameter D₅₀ of dispersoid (µm) | Dispersion stability | Haze value | Plate-out property |
|---|---|---|---|---|---|---|---|---|---|---|---|
| | Kind | Content (part (s) by weight) | Acid value | Density | Content (part (s) by weight) | | | | | | |
| Example 1 | DOTP | 55.9 | 16 | 0.98 | 2.1 | 0 | Present | 12.8 | ○ | 6.4 | 3 |
| Example 2 | | 57.3 | | | 0.7 | 0 | | 4.2 | ○ | 13.6 | 2 |
| Example 3 | | 56.6 | | | 1.4 | 0 | | 5.9 | ○ | 10.7 | 3 |
| Example 4 | | 55.9 | | | 2.1 | 0.1 | | 11.5 | ○ | 6.5 | 4 |
| Example 5 | | 53 | | | 5 | 0 | | 17.5 | ○ | 5.9 | 4 |
| Example 6 | | 48 | | | 10 | 0 | | 22.2 | ○ | 5.7 | 4 |
| Example 7 | | 55.9 | 7 | 0.98 | 2.1 | 0 | | 18.5 | ○ | 6.4 | 3 |
| Example 8 | | 55.9 | 25 | 0.99 | 2.1 | 0 | | 7.6 | ○ | 6.7 | 4 |
| Example 9 | | 55.9 | 30 | 0.99 | 2.1 | 0 | | 8.1 | ○ | 6.9 | 4 |
| Example 10 | | 55.9 | 41 | 1 | 2.1 | 0 | | 13.7 | ○ | 6.5 | 3 |
| Example 11 | | 55.9 | 15 | 0.85 | 2.1 | 0 | | 8.6 | ○ | 6.6 | 2 |
| Example 12 | Petroleum-based hydrocarbon | 55.9 | 16 | 0.98 | 2.1 | 0.1 | | 5.7 | ○ | 5.9 | 4 |
| Example 13 | Alkylbenzene | 55.9 | 16 | 0.98 | 2.1 | 0.1 | | 5.9 | ○ | 5.8 | 4 |
| Comparative Example 1 | DOTP | 58 | | | | 0 | Absent | | × | 15.2 | 1 |
| Comparative Example 2 | | 55.9 | 16 | 0.98 | 2.1 | 0 | | 67.9 | × | 17.5 | 1 |
| Comparative Example 3 | | 55.9 | 0 | 0.92 | 2.1 | 0 | Present | 11.8 | ○ | 17.5 | 1 |

Each of the liquid stabilizers obtained in Examples 1 to 13 had the dispersoid including the oxidized polyethylene wax dispersed with a median diameter (D₅₀) in the range of from 1 µm to 50 µm, and was also excellent in dispersion stability. Further, the vinyl chloride-based resin compositions containing those liquid stabilizers were all excellent in releasability. Further, the compositions each also had a low haze value, and hence achieved both excellent releasability and excellent transparency.

### Industrial Applicability

The liquid stabilizer for a chlorine-containing resin of the present invention can be suitably used in a vinyl chloride-based resin composition. The vinyl chloride-based resin composition containing the liquid stabilizer for a chlorine-containing resin of the present invention can be used in a molded article such as a film, a sheet, a packaging container (e.g., a tray), an electric wire-coating material, an interior or exterior material for an automobile, an agricultural material (e.g., a plastic greenhouse), a hose, a pipe, a wall material, a floor material, sailcloth, leather, a toy, a rubber glove, or a rubber boot. In particular, the vinyl chloride-based resin composition containing the liquid stabilizer for a chlorine-containing resin of the present invention can be suitably used in a film for food packaging.

## Claims

1. A liquid stabilizer for a chlorine-containing resin, comprising:
an oxidized polyethylene wax having an acid value of 5 mgKOH/g or more;
a dispersion medium; and
at least one kind selected from the group consisting of a zinc salt, an alkaline earth metal salt, and an organotin compound,
wherein the liquid stabilizer is a dispersion, and
wherein a dispersoid including the oxidized polyethylene wax has a median diameter (D₅₀) of from 1 µm to 50 µm.

2. The liquid stabilizer according to claim 1, wherein a content of the oxidized polyethylene wax is from 0.1 wt% to 15 wt% with respect to a total amount of the liquid stabilizer.

3. The liquid stabilizer according to claim 1 or 2, wherein the oxidized polyethylene wax has a density of 0.85 g/cm³ or more.

4. The liquid stabilizer according to any one of claims 1 to 3, further comprising a dispersant.

5. A manufacturing method for a liquid stabilizer for a chlorine-containing resin composition, comprising:
mixing at least a dispersion medium and an oxidized polyethylene wax with each other at a temperature equal to or higher than a dropping point of the oxidized polyethylene wax; and
cooling the mixture while stirring the mixture.

6. The manufacturing method according to claim 5, wherein the cooling the mixture while stirring the mixture is performed until a temperature of the mixture becomes 90°C or less.

7. The manufacturing method according to claim 5 or 6, wherein the stirring is performed using a high-speed stirring disperser or a dispersion pulverizer configured to use dispersion media.

8. The manufacturing method according to any one of claims 5 to 7, further comprising, before the stirring, adding a dispersant to the mixture.
